# EUROPEAN PATENT APPLICATION

(11) **EP 4 345 227 A1**
(43) Date of publication of application: **03.04.2024**
(21) Application number: 23382625.4
(22) Date of filing: 21.06.2023
(51) Int. Cl.: E04H 12/12, E02D 27/42, E04H 12/34, E04H 12/16, F03D 13/20

(54) **CONCRETE SEGMENT OF A SECTION OF A WIND TURBINE TOWER, MOULD CONFIGURED TO CAST A CONCRETE SEGMENT AND METHOD OF ASSEMBLING A WIND TURBINE**

(30) Priority: 26.09.2022 EP 22382883
(71) Applicant: Nordex Energy Spain, S.A.U., 31395 Barasoain (Navarra) (ES)
(72) Inventor: Garduño, Aitor, Barasoain (ES); Gonzalez, Miguel, Barasoain (ES); García, Iván, Barasoain (ES); Varela, Fernando, Barasoain (ES); Arlabán, Teresa, Barasoain (ES)
(74) Representative: Pons

(57) **Abstract**

The object of the invention is a concrete segment of a section of a wind turbine tower which minimizes the undesirable local effects in the connection area between adjacent concrete sections, a section comprising at least two concrete segments, a set comprising two adjacent sections and a joint disposed between the two adjacent sections, a tower comprising at least one set, a mould configured to cast a concrete segment and a method of assembling a wind turbine.

## Description

### OBJECT OF THE INVENTION

The object of the invention is a concrete segment of a section of a wind turbine tower which minimizes the undesirable local effects in the connection area of the upper concrete section and the adapter.

The invention also relates to a section comprising at least two concrete segments, a tower comprising at least one section, a mould configured to cast a concrete segment and a method of assembling a wind turbine.

### BACKGROUND OF THE INVENTION

The wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

One of the most commonly used materials for large towers is concrete, since it involves competitive costs and performance compared to those for the production of steel towers of similar characteristics. However, the weight of each concrete tower section can easily exceed one hundred tons, this fact being infrequent for metal tower sections, so stacking the concrete sections requires heavy-tonnage lifting and positioning means. The cost of using such lifting and positioning means, which may be for example a crane, is directly related to the tonnage and height that it is capable of handling and the time of use thereof. This high-tonnage crane is also used for lifting and positioning the nacelle, as the weight of the nacelle may also exceed 100 tons.

The design of wind turbine components and the design of the connections between them once placed, should take into account the loads they will have to bear throughout their useful life to ensure the proper functioning thereof. In particular, the connections between different concrete sections of the tower or between an upper concrete section and an adapter disposed above the upper concrete section for the transition between the concrete sections and the steel sections in the case of hybrid towers or for the transition between the concrete sections and the nacelle of the wind turbine in the case of full concrete towers, are adapted to withstand the loads they will have to bear throughout their useful life, such as gravitational loads, assembly loads, inertial loads, aerodynamic loads, operational loads and other loads that depend on the location where the wind turbine is to be installed, such as earthquakes.

Currently, some wind turbine towers with concrete segments include a geometry of the adapter which comprises a concrete part comprising an inward thickness increase towards the inside of the tower with respect to the wall thickness in a central part of the concrete part and a steel part. This inward thickness increase towards the inside of the tower is necessary for providing a wider contact area for the concrete-grout (or concrete-resin) interfaces in the horizontal joint between the concrete part and the steel part of the adapter so that the stresses can be stood by the filler material (grout or resin) used in the horizontal joints, allowing for some manufacturing or pouring deficiencies of such filler material.

However, this state-of-the-art geometry gives rise to undesirable local effects in the concrete segments, such as:
- Local bending moments in transition region from the central part and the connection area of the concrete part that increase concrete compressive stresses and that require additional reinforcement for tensile forces at the beginning of the connection area; and
- Circumferential compressive and tensile stresses close to thickness changes.

The present invention solves the problems described above by providing a concrete segment of an upper section of a wind turbine tower which minimizes the undesirable local effects in the connection area between the upper concrete section and the adapter.

### DESCRIPTION OF THE INVENTION

The invention relates to a concrete segment of an upper concrete section of a wind turbine tower, wherein the concrete segment comprises:
- a central area comprising an inner surface and an outer surface, wherein the central area further comprises a first wall thickness defined as the distance between the inner surface and the outer surface; and
- at least one upper connection area comprising a horizontal connection flange, wherein the at least one upper connection area is configured to be connected, in use, to an adapter disposed adjacent to the at least one upper connection area, by means of the horizontal connection flange, wherein the at least one upper connection area comprises a second wall thickness being bigger than the first wall thickness, the second wall thickness comprising an inward thickness increase with respect to the first wall thickness;
- at least one lower connection area comprising a horizontal connection flange, wherein the at least one lower connection area comprises a second wall thickness, wherein the at least one lower connection area is configured to be connected, in use, to a horizontal connection flange of an adjacent upper connection area of an adjacent concrete segment
wherein a ratio of the second wall thickness of the at least one upper connection area, and the second wall thickness of the at least one lower connection area, is between 1,3 and 3,5, preferably between 1,5 and 3, more preferably between 2 and 2,4.

The expression "inward thickness increase" means inward thickness increase towards the inside of the wind turbine tower, when in use, the concrete segment is disposed in the tower.

Optionally, the concrete segment further comprises a central surface located at the same distance from the inner surface as from the outer surface, wherein in use, a load path intended to be transmitted along the central area is coincident with the central surface.

The load path is the path that the loads of the wind turbine follow from the upper part of the wind turbine to a foundation.

The expression "central surface" is an interior surface of the concrete segment, being non-accessible, i.e., it is a virtual central surface of the concrete segment.

Preferably, in use, the central surface is coincident with a load path intended to be transmitted along the central area.

In this way, the concrete segment so configured provides the following structural improvements:
- The local bending is avoided, reducing drastically fatigue damage in concrete and avoiding additional local reinforcements;
- Circumferential stresses are minimized; and
- Local effects and stresses concentrations in a transition region from the central area to the connection are minimized with the new proposed geometry.
- Uncertainties and undesirable local effects are avoided.

All this is translated in either, i) less need of reinforcements at horizontal connection flange and above all, an important improvement of fatigue life in concrete, making it possible to reduce the concrete quality around 10-15 MPa (e.g., from C80 to C65) or ii) alternatively, a reduction in the thickness of the walls while keeping the same concrete quality, decreasing in this way the amount of concrete and achieving lighter upper tower sections, easier to lift with cranes, or even iii) a combination of both i) and ii).

Preferably, in use, the load path intended to be transmitted along the central area is coincident with a load path intended to be transmitted along the at least one upper connection area and/or the at least one lower connection area, preferably along the at least one upper connection area and along the at least one lower connection area.

Preferably, in use, the load path intended to be transmitted along the at least one upper connection area and/or the at least one lower connection area is substantially straight. More preferably, the load path intended to be transmitted along the concrete segment is substantially straight.

Optionally, the second wall thickness of the at least one lower connection area is bigger or equal than the first wall thickness.

Optionally, the second wall thickness of the at least one lower connection area comprises an inward thickness increase with respect to the first wall thickness.

Optionally, the second wall thickness of the at least one lower connection area comprises an outward thickness increase with respect to the first wall thickness

The expression "outward thickness increase" means outward thickness increase towards the outside of the wind turbine tower, when in use, the concrete segment is disposed in the tower.

Optionally, the second wall thickness of the at least one upper connection area further comprises an outward thickness increase with respect to the first wall thickness.

Optionally, the inward thickness increase and/or the outward thickness increase of the second wall thickness of the at least one upper connection area and/or of the at least one lower connection area comprises at least one oblique part and/or at least one substantially vertical part adjacent to the horizontal connection flange.

Optionally, the inward thickness increase is bigger than or equal to the outward thickness increase.

Preferably, the inward thickness increase is bigger than the outward thickness increase at least in a part of the at least one upper connection area and/or the at least one lower connection area.

Also preferably, the inward thickness increase is bigger than the outward thickness increase along the whole extension of the at least one upper connection area and/or the at least one lower connection area.

Optionally, the inward thickness increase and the outward thickness increase are symmetrical with regards to the central surface, preferably in the at least one lower connection area.

Optionally, the inward thickness increase and the outward thickness increase are asymmetrical, preferably in the at least one upper connection area.

Optionally, the thickness increases in the at least one oblique part of the inward thickness increase and/or the outward thickness increase

Preferably, the at least one substantially vertical part is adjacent to the horizontal connection flange.

Preferably, the at least one substantially vertical part is adjacent to the horizontal connection flange and follows a conicity of the tower (preferably a conicity slope between 0.5°-3° with a vertical plane).

Preferably, the oblique part comprises an oblique part slope, wherein the oblique part slope in the at least one upper connection area is between 45° and 80° with a horizontal plane, more preferably between 65° and 77° with a horizontal plane, more preferably 73° and/or the oblique part slope in the at least one lower connection area is between 70° and 89°.

Optionally, the at least one upper connection area and/or the at least one lower connection area comprise a height, and the concrete segment comprises a height, wherein the height of the at least one upper connection area and/or the at least one lower connection area is between 5% and 30% of the height of the concrete segment. Preferably, the height of the at least one upper connection area is between 15% and 30% of the height of the concrete segment and/or the height of the at least one lower connection area is between 5% and 20% of the height of the concrete segment.

Preferably, the at least one oblique part of the at least one upper connection area comprises a height, a greater thickness and a lower thickness, wherein a ratio between the greater thickness and the height of the at least one oblique part is between 0,4 and 0,5 and a ratio between the lower thickness and the height of the at least one oblique part is between 0,4 and 0,55.

Preferably, the at least one substantially vertical part of the at least one upper connection area comprises a height and a thickness, wherein a ratio between the thickness and the height of the at least one substantially vertical part is between 0, 9 and 1,1

Preferably, the at least one oblique part of the at least one lower connection area comprises a height, a greater thickness and a lower thickness, wherein a ratio between the greater thickness and the height of the at least one oblique part is between 0,7 and 0,85 and a ratio between the lower thickness and the height of the at least one oblique part is between 0,1 and 0,2,.

Preferably, the at least one substantially vertical part of the at least one lower connection area comprises a height and a thickness, wherein a ratio between the thickness and the height of the at least one substantially vertical part is between 0,65 and 0,85.

Optionally, the at least one oblique part of the of the at least one upper connection area comprises at least a hole configured, in use, to allow the insertion of a post-tensioning element, wherein the hole comprises a lower end disposed in a first position of the at least one oblique part wherein a ratio of the second wall thickness at the first position, and the first wall thickness, is between 1 and 1,15, preferably 1,08.

Optionally, the concrete segment comprises just one upper connection area comprising a second wall thickness bigger than the first thickness, and is located in an upper end of the segment.

Preferably, the second wall thickness at the upper connection area is between 100% and 225% of the second wall thickness at the lower connection area, more preferably between 100% and 125%.

Optionally, the first wall thickness increases from the lower part to the upper part of the central part of the concrete segment.

Optionally, the first wall thickness is constant from the lower part to the upper part of the central part of the concrete segment.

The invention also relates to an upper concrete section comprising at least two concrete segments as described above.

The invention also relates to a tower comprising an upper concrete section as described above.

The invention also relates to a wind turbine comprising a tower as described above.

The invention also relates to a mould configured to cast a concrete segment as described above, wherein the mould comprises at least a base, a counter-mould and two lateral sides,
wherein the base comprises:
   - a central surface comprising an exterior diameter; and
   - a first connection surface disposed adjacent to one lateral side, wherein the first connection surface comprises at least one first exterior diameter;
   - a second connection surface disposed adjacent to the other lateral side, wherein the second connection surface comprises at least one second exterior diameter greater than exterior diameter of the central surface; and
wherein the counter-mould comprises
   - a central surface comprising an interior diameter; and
   - a first connection surface disposed adjacent to the one lateral side, wherein the first connection surface comprises at least one first interior diameter lower than interior diameter of the central surface;
   - a second connection surface disposed adjacent to the other lateral side, wherein the second connection surface comprises at least one second interior diameter;
wherein a ratio between the difference between the first exterior diameter of the first connection surface of the base and the first interior diameter of the first connection surface of the counter-mould, and the difference between the second exterior diameter of the second connection surface of the base and the second interior diameter of the second connection surface of the counter-mould, is between 1,3 and 3,5, preferably between 1,5 and 3, more preferably between 2 and 2,4.

Optionally, the at least one first exterior diameter of the first connection surface is greater than the exterior diameter of the central surface;

Optionally, the at least one second interior diameter of the second connection surface is lower than the interior diameter of the central surface;

Optionally, the first connection surface of the base and/or the second connection surface of the base, and the first connection surface of the counter-mould and/or the second connection surface of the counter-mould comprise at least one oblique part and at least one substantially horizontal part adjacent to the one lateral side or to the other lateral side;

The invention also relates to a method of assembling a wind turbine comprising at least a step of assembling an upper concrete section as described above comprising the steps of:
- raising a lower concrete section;
- raising the upper concrete section onto the lower concrete section;
- performing the horizontal joint disposed between the lower section and the upper concrete section.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

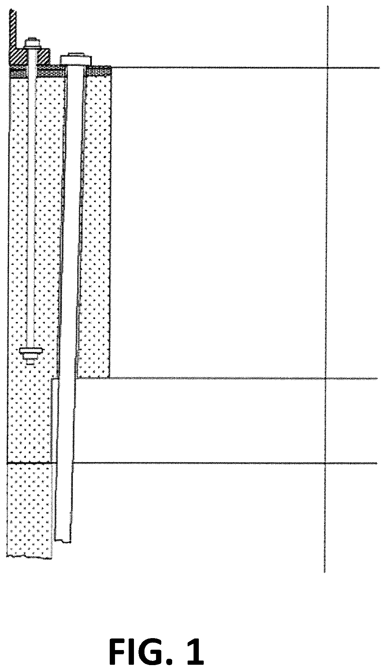

Figure 1 shows a concrete part and a steel part of an adapter of a wind turbine tower according to the state of the art, showing the eccentricity, e, of the load path coming from a steel section or a nacelle to the adapter.

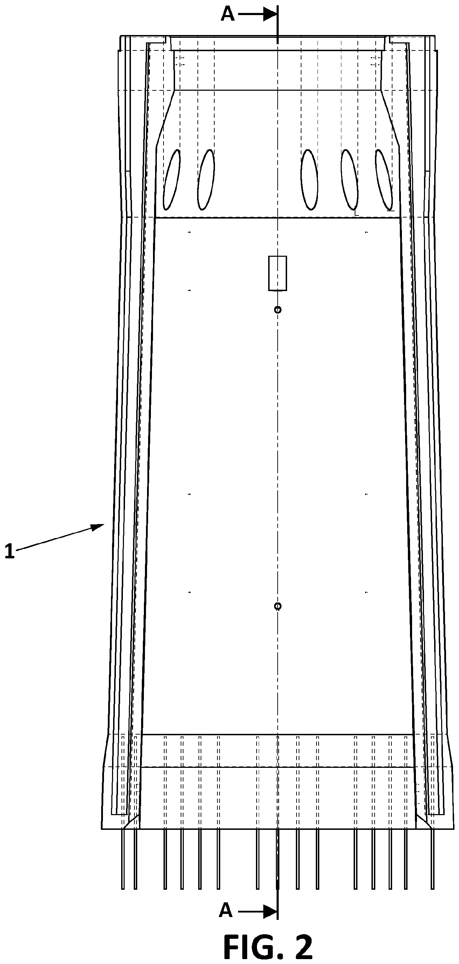

Figure 2 shows a concrete segment according to the invention.

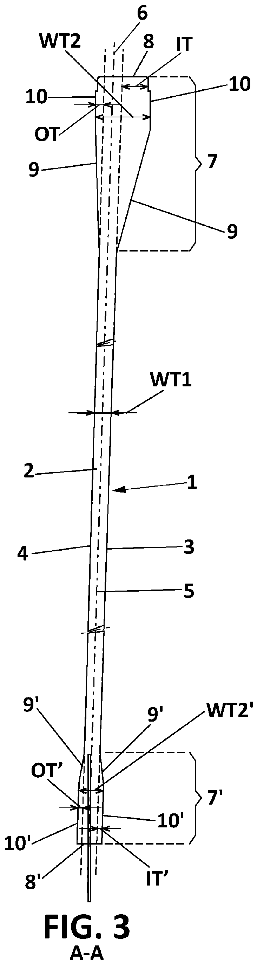

Figure 3 shows a section AA of Figure 2.
Figure 4 shows a sectioned view of the concrete segment according to the invention disposed below the adapter.

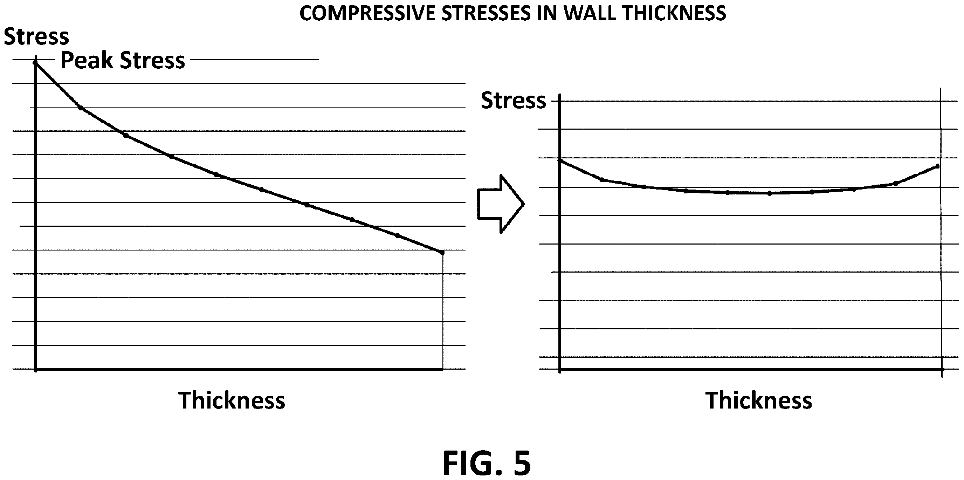

Figure 5 shows the compressive stresses in wall thickness of the concrete segment according to a concrete segment of the state of the art (left side) and according to the invention (right side).

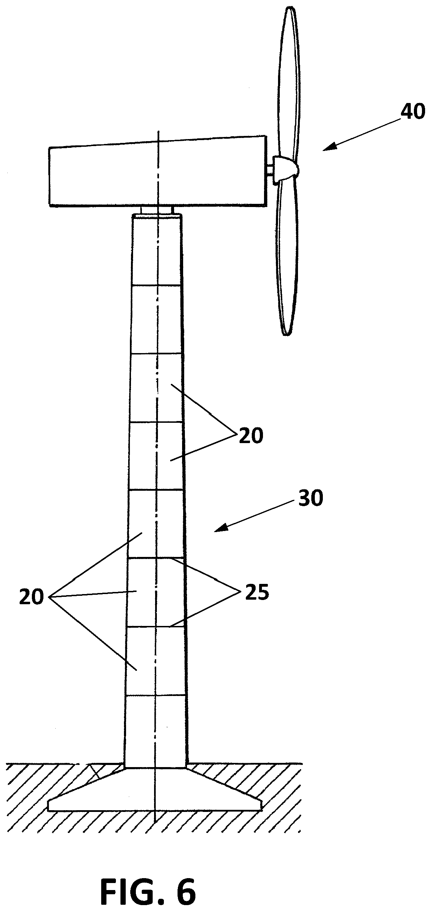

Figure 6 shows a wind turbine according to another aspect of the invention.

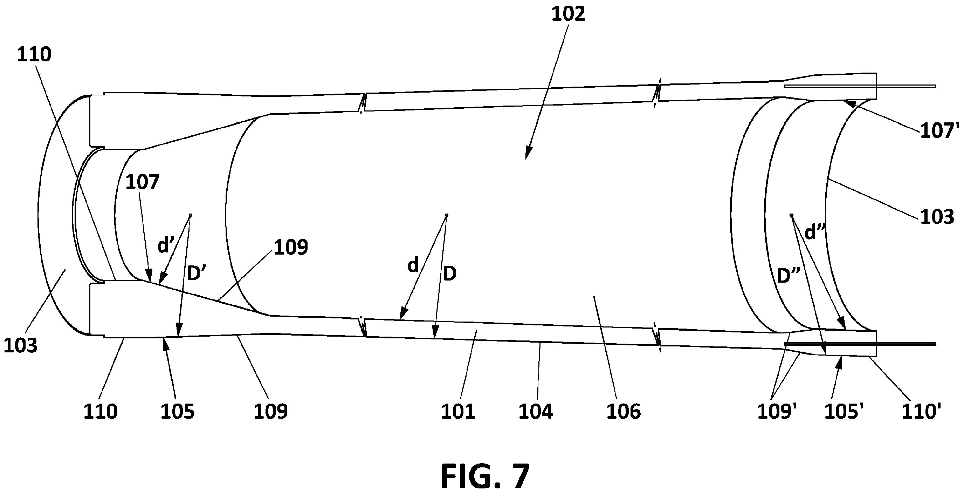

Figure 7 shows a mould according to another aspect of the present invention.

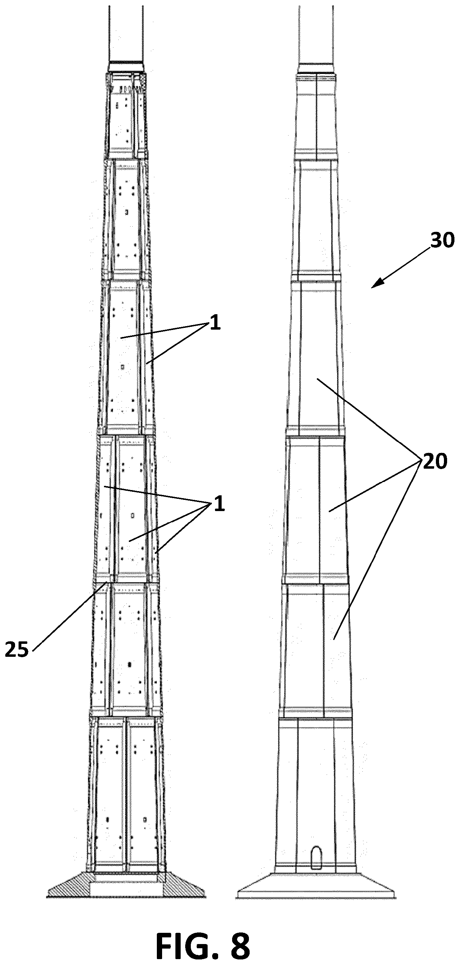

Figure 8 shows on the left side a cross-section according to a vertical plane of a tower comprising an upper concrete section according to the invention, and on the right side, said tower according to the invention.

### PREFERRED EMBODIMENT OF THE INVENTION

The following is a detailed description of the concrete segment (1) of an upper concrete section (20) of a wind turbine tower (30) according to the invention, wherein the concrete segment (1) comprises:
- a central area (2) comprising an inner surface (3) and an outer surface (4), wherein the central area (2) further comprises a first wall thickness (WT1) defined as the distance between the inner surface (3) and the outer surface (4); and
- at least one upper connection area (7) comprising a horizontal connection flange (8), wherein the at least one upper connection area (7) is configured to be connected, in use, to an adapter disposed adjacent to the at least one upper connection area (7), by means of the horizontal connection flange (8), wherein the at least one upper connection area (7) comprises a second wall thickness (WT2) being bigger than the first wall thickness (WT1), the second wall thickness (WT2) comprising an inward thickness increase (IT) with respect to the first wall thickness (WT1);
- at least one lower connection area (7') comprising a horizontal connection flange (8'), wherein the at least one lower connection area (7') is configured to be connected, in use, to a horizontal connection flange (8") of an adjacent upper connection area (7") of an adjacent concrete segment (1'), wherein the at least one lower connection area (7') comprises a second wall thickness (WT2');
wherein a ratio of the second wall thickness (WT2) of the at least one upper connection area (7), and the second wall thickness (WT2') of the at least one lower connection area (7'), is between 1,5 and 3.

Preferably, the concrete segment (1) further comprises a central surface (5) located at the same distance from the inner surface (3) as from the outer surface (4), wherein in use, a load path (6) intended to be transmitted along the central area (2) is coincident with the central surface (5).

Preferably, the second wall thickness (WT2) of the at least one upper connection area (7) further comprises an outward thickness increase (OT) with respect to the first wall thickness (WT1);

Preferably, the inward thickness increase (IT) and/or the outward thickness increase (OT) comprises at least one oblique part (9) and at least one substantially vertical part (10) adjacent to the horizontal connection flange (8);

Preferably, the ratio of the second wall thickness (WT2) and the first wall thickness (WT1) is a ratio of the second wall thickness (WT2) in the at least one substantially vertical part (10), and the first wall thickness (WT1).

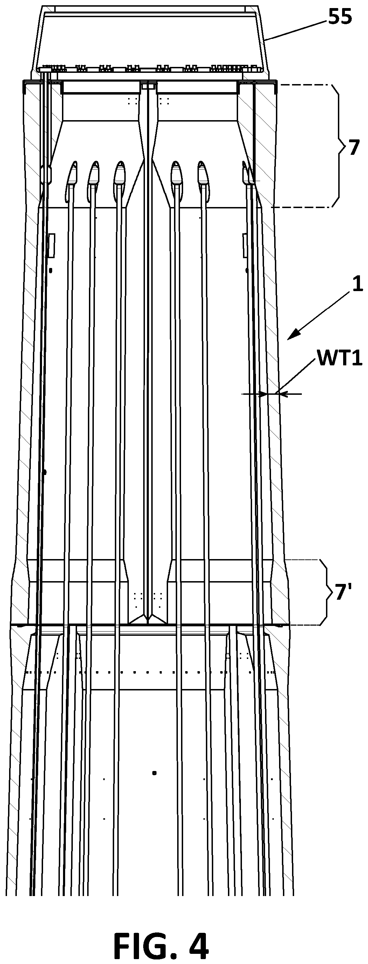

According to a first preferred embodiment shown in Figure 4, the concrete segment (1) comprises an upper connection area (7), wherein the inward thickness increase (IT) is bigger than the outward thickness increase (OT) along the whole of the upper connection area (7), and a lower connection area (7'), wherein the inward thickness increase (IT') is equal to the outward thickness increase (OT'). In this embodiment, the inward thickness increase (IT) and the outward thickness increase (OT) of the upper connection area (7) are asymmetrical with regards to the central surface (5), whereas the inward thickness increase (IT?) and the outward thickness increase (OT?) of the lower connection area are symmetrical with regards to the central surface (5). Also, the inward thickness increase (IT) of the upper connection area (7) comprises one oblique part (9) and one substantially vertical part (10), wherein the thickness increases in the one oblique part (9), whereas the outward thickness increase (OT) of the upper connection area (7) comprises one oblique part (9) wherein the thickness increases.

The invention also relates to an upper concrete section (20) comprising at least two concrete segments (1) as described above.

The invention also relates to a tower (30) comprising an upper concrete section (20) as described above.

The invention also relates to a wind turbine comprising a tower (30) as described above.

The invention also relates to a mould (100) configured to cast a concrete segment (1) of any of the embodiments described above, wherein the mould (100) comprises at least a base (101), a counter-mould (102) and two lateral sides (103),
wherein the base (101) comprises:
   - a central surface (104) comprising an exterior diameter (D); and
   - a first connection surface (105) disposed adjacent to one lateral side (103), wherein the first connection surface (105) comprises at least one first exterior diameter (D') greater than exterior diameter (D) of the central surface (104); and,
   - a second connection surface (105') disposed adjacent to the other lateral side (103), wherein the second connection surface (105') comprises at least one second exterior diameter (D") greater than exterior diameter (D) of the central surface (104); and
wherein the counter-mould (102) comprises
   - a central surface (106) comprising an interior diameter (d); and
   - a first connection surface (107) disposed adjacent to the one lateral side (103), wherein the first connection surface (107) comprises at least one first interior diameter (d') lower than interior diameter (d) of the central surface (106);
   - a second connection surface (107') disposed adjacent to the other lateral side (103), wherein the second connection surface (107') comprises at least one second interior diameter (d") lower than interior diameter (d) of the central surface (106);

   wherein the first connection surface (105) of the base (101) and/or the second connection surface (105') of the base (101), and the first connection surface (107) of the counter-mould (102) and/or the second connection surface (107') of the counter-mould (102) comprise at least one oblique part (109, 109') and at least one substantially horizontal part (110, 110') adjacent to the one lateral side (103) or to the other lateral side (103).
   wherein a ratio between the difference between the first exterior diameter (D') of the first connection surface (105) of the base (101) and the first interior diameter (d') of the first connection surface (107) of the counter-mould (102), and the difference between the second exterior diameter (D") of the second connection surface (105') of the base (101) and the second interior diameter (d") of the second connection surface (107') of the counter-mould (102), is between 1,5 and 3.

## Claims

1. Concrete segment (1) of an upper concrete section (20) of a wind turbine tower (30), wherein the concrete segment (1) comprises:
- a central area (2) comprising an inner surface (3) and an outer surface (4), wherein the central area (2) further comprises a first wall thickness (WT1) defined as the distance between the inner surface (3) and the outer surface (4); and
- at least one upper connection area (7) comprising a horizontal connection flange (8), wherein the at least one upper connection area (7) is configured to be connected, in use, to an adapter disposed adjacent to the at least one upper connection area (7), by means of the horizontal connection flange (8), wherein the at least one upper connection area (7) comprises a second wall thickness (WT2) being bigger than the first wall thickness (WT1), the second wall thickness (WT2) comprising an inward thickness increase (IT) with respect to the first wall thickness (WT1);
- at least one lower connection area (7') comprising a horizontal connection flange (8'), wherein the at least one lower connection area (7') is configured to be connected, in use, to a horizontal connection flange (8") of an adjacent upper connection area (7") of an adjacent concrete segment (1'), wherein the at least one lower connection area (7') comprises a second wall thickness (WT2');
wherein a ratio of the second wall thickness (WT2) of the at least one upper connection area (7), and the second wall thickness (WT2') of the at least one lower connection area (7'), is between 1,3 and 3,5.

2. The concrete segment (1) of claim 1, wherein the ratio of the second wall thickness (WT2) of the at least one upper connection area (7), and the second wall thickness (WT2') of the at least one lower connection area (7'), is between 1,5 and 3.

3. The concrete segment (1) of any of preceding claims, wherein the second wall thickness (WT2') of the at least one lower connection area (7') is bigger or equal than the first wall thickness (WT1).

4. The concrete segment (1) of claim 3, wherein the second wall thickness (WT2') of the at least one lower connection area (7') comprises an inward thickness increase (IT') with respect to the first wall thickness (WT1).

5. The concrete segment (1) of any of claims 3 or 4, wherein the second wall thickness (WT2') of the at least one lower connection area (7') comprises an outward thickness increase (OT') with respect to the first wall thickness (WT1);

6. The concrete segment (1) of any of preceding claims, wherein the second wall thickness (WT2) of the at least one upper connection area (7) further comprises an outward thickness increase (OT) with respect to the first wall thickness (WT1).

7. The concrete segment (1) of any of claims 1, 4, 5 or 6, wherein the inward thickness increase (IT, IT') and/or the outward thickness increase (OT, OT') of the second wall thickness (WT2, WT2') of the at least one upper connection area (7) and/or of the at least one lower connection area (7') comprises at least one oblique part (9, 9') and at least one substantially vertical part (10, 10') adjacent to the horizontal connection flange (8, 8').

8. The concrete segment (1) of any of claims 5 to 7, wherein the inward thickness increase (IT, IT') is bigger than or equal to the outward thickness increase (OT, OT').

9. The concrete segment (1) of claim 8, wherein the inward thickness increase (IT) is bigger than the outward thickness increase (OT) at least in a part of the at least one upper connection area (7) and/or the at least one lower connection area (7').

10. The concrete segment (1) of claim 9, wherein the inward thickness increase (IT) is bigger than the outward thickness increase (OT) along the whole extension of the at least one upper connection area (7) and/or the at least one lower connection area (7').

11. The concrete segment (1) of any of the claims 4 to 10, wherein the inward thickness increase (IT, IT') and the outward thickness increase (OT, OT') are asymmetrical.

12. The concrete segment (1) of any of the claims 7 or 11, wherein the at least one oblique part (9) of the at least one upper connection area (7) comprises a height, a greater thickness and a lower thickness, and the at least one substantially vertical part (10) of the at least one upper connection area (7) comprises a height and a thickness, wherein a ratio between the greater thickness and the height of the at least one oblique part (9) is between 0,4 and 0,5, a ratio between the lower thickness and the height of the at least one oblique part (9) is between 0,4 and 0,55, and a ratio between the thickness and the height of the at least one substantially vertical part (10) is between 0,9 and 1,1.

13. The concrete segment (1) of any of the claims 7 or 11, wherein the at least one oblique part (9') of the at least one lower connection (7') area comprises a height, a greater thickness and a lower thickness, and the at least one substantially vertical part (10') of the at least one lower connection area (7') comprises a height and a thickness, wherein a ratio between the greater thickness and the height of the at least one oblique part (9') is between 0,7 and 0,85, a ratio between the lower thickness and the height of the at least one oblique part (9') is between 0,1 and 0,2, and a ratio between the thickness and the height of the at least one substantially vertical part (10') is between 0,65 and 0,85.

14. Upper concrete section (20) comprising at least two concrete segments (1) of any of claims 1 to 13.

15. Tower (30) comprising at least one upper section (20) of claim 14.

16. Wind turbine (40) comprising the tower (30) of claim 15.

17. Mould (100) configured to cast a concrete segment of any of the claims 1 to 13, wherein the mould (100) comprises at least a base (101), a counter-mould (102) and two lateral sides (103),
wherein the base (101) comprises:
- a central surface (104) comprising an exterior diameter (D); and
- a first connection surface (105) disposed adjacent to one lateral side (103), wherein the first connection surface (105) comprises at least one first exterior diameter (D'); and,
- a second connection surface (105') disposed adjacent to the other lateral side (103), wherein the second connection surface (105') comprises at least one second exterior diameter (D") greater than exterior diameter (D) of the central surface (104); and
wherein the counter-mould (102) comprises
- a central surface (106) comprising an interior diameter (d); and
- a first connection surface (107) disposed adjacent to the one lateral side (103), wherein the first connection surface (107) comprises at least one first interior diameter (d') lower than interior diameter (d) of the central surface (106);
- a second connection surface (107') disposed adjacent to the other lateral side (103), wherein the second connection surface (107') comprises at least one second interior diameter (d");
wherein a ratio between the difference between the first exterior diameter (D') of the first connection surface (105) of the base (101) and the first interior diameter (d') of the first connection surface (107) of the counter-mould (102), and the difference between the second exterior diameter (D") of the second connection surface (105') of the base (101) and the second interior diameter (d") of the second connection surface (107') of the counter-mould (102), is between 1,3 and 3,5, preferably between 1,5 and 3, more preferably between 2 and 2,4.

18. Method of assembling a wind turbine (40) comprising at least a step of assembling the upper concrete section (20) of claim 14 comprising the steps of:
- raising a lower concrete section;
- raising the upper concrete section onto the lower concrete section;
- performing the horizontal joint (25) disposed between the lower section and the upper concrete section.
